# EUROPÄISCHE PATENTSCHRIFT

(11) **EP 2 689 968 B1**
(45) Veröffentlichungstag und Bekanntmachung des Hinweises auf die Patenterteilung: **11.05.2016**
(21) Anmeldenummer: 13177147.9
(22) Anmeldetag: 19.07.2013
(51) Int. Cl.: B60R 9/058

(54) **Dachträger für ein Kraftfahrzeug, Verfahren zum Betreiben eines Steuergeräts eines Kraftfahrzeugs sowie entsprechendes Steuergerät**
Roof rack for a motor vehicle, method for operating a control unit of a motor vehicle and corresponding control device
Support de toit pour un véhicule automobile, procédé de fonctionnement d'un appareil de commande d'un véhicule automobile et appareil de commande correspondant

(30) Priorität: 25.07.2012 DE 102012014696
(43) Veröffentlichungstag der Anmeldung: 29.01.2014
(73) Patentinhaber: AUDI AG, 85045 Ingolstadt (DE)
(72) Erfinder: Pfeiffer, Ulrich, 85123 Karlskron / Probfeld (DE); Ballweg, Felix, 85123 Karlskron (DE); Schmid, Wolfgang, 85354 Freising (DE)

(56) Entgegenhaltungen:
- WO-A1-93/20601

## Beschreibung

Die Erfindung betrifft eine Dachträgereinrichtung für ein Kraftfahrzeug, mit einer auf einem Fahrzeugdach des Kraftfahrzeugs befestigbaren Dachreling und einem auf der Dachreling montierbaren Lastenträger. Die Erfindung betrifft weiterhin ein Verfahren zum Betreiben eines Steuergeräts eines Kraftfahrzeugs sowie ein entsprechendes Steuergerät.

Dachträgereinrichtungen der eingangs genannten Art sind aus dem Stand der Technik bekannt. Sie bestehen aus der Dachreling, welche wenigstens eine, häufig jedoch mehrere, beispielsweise zwei, Dachleisten aufweist, die parallel zueinander, beispielsweise in Längsrichtung des Kraftfahrzeugs, auf dem Fahrzeugdach des Kraftfahrzeugs befestigbar sind. Nach einer ersten Befestigung verbleibt die Dachreling üblicherweise permanent an dem Fahrzeugdach. Die Befestigung der Dachreling beziehungsweise der Dachleiste erfolgt beispielsweise, indem wenigstens ein Befestigungselement eine Dachhaut, auf welchem die Dachreling wenigstens bereichsweise aufliegt, durchgreift und auf ihrer anderen Seite mit einem Gegenelement und/oder einem Dachgerüst des Kraftfahrzeugs verbunden ist. Die Dachleiste der Dachreling liegt bevorzugt wenigstens bereichsweise beabstandet zu dem Fahrzeugdach vor, weist also beispielsweise zwei Dachleistenfüße auf, mit welchen sie in Kontakt mit dem Fahrzeugdach tritt. Beispielsweise ist die Dachleiste derart gebogen, dass ihre beiden Endbereiche die Dachleistenfüße ausbilden, während ein zwischen den Dachleistenfüßen gelegener Bereich der Dachleiste zu dem Fahrzeugdach beabstandet ist.

Zu der Dachträgereinrichtung gehört weiterhin der Lastenträger, welcher auf der Dachreling montierbar ist. Das bedeutet, dass der Lastenträger nicht permanent an der Dachreling vorliegen muss, sondern beispielsweise erst bei beabsichtigter Beförderung von Lasten mithilfe des Kraftfahrzeugs angebracht wird. Entsprechend ist bevorzugt eine manuell von einem Benutzer der Dachträgereinrichtung lösbare Befestigung des Lastenträgers an der Dachreling vorgesehen. Um fahrdynamische und sicherheitstechnische Anforderungen erfüllen zu können, soll ein Steuergerät des Kraftfahrzeugs bereits bei montiertem Lastenträger, also unabhängig davon, ob dieser beladen ist oder nicht, in einer anderen Betriebsart betrieben werden als bei nicht montiertem Lastenträger. Die erstere Betriebsart berücksichtigt dabei beispielsweise bereits eine potentielle Dachlast durch den Lastenträger beziehungsweise eine auf oder an dem Lastenträger angeordnete Last. Dazu löst beispielsweise der Lastenträger bei seiner Montage eine Schaltvorrichtung aus, sodass seine Anwesenheit detektiert werden kann. Handelsübliche Lastenträger lassen sich jedoch auch an Stellen montieren, für welche die Schaltvorrichtung die Anwesenheit des Lastenträgers nicht erkennen kann. Es kann auch der Fall sein, dass der Lastenträger nicht mit der Schaltvorrichtung zusammenarbeiten kann, insbesondere wenn ein nicht für das Kraftfahrzeug zugelassener Lastenträger verwendet wird. Somit besteht die Gefahr, dass bei nicht sachgemäßer Befestigung des Lastenträgers beziehungsweise der gesamten Dachträgereinrichtung das Steuergerät des Kraftfahrzeugs in der falschen Betriebsart betreibt.

Aus dem Stand der Technik ist die Druckschrift WO 93/20601 A1 bekannt. Diese betrifft ein mechanisches und/oder elektromechanisches Verbindungssystem für lasttragende Anbauteile für ein Kraftfahrzeug. Dabei ist eine Einrichtung vorgesehen, um ein aus einer Vielzahl von Anbauteilen ausgewähltes Anbauteil an dem Kraftfahrzeug lösbar zu befestigen.

Es ist daher Aufgabe der Erfindung, eine Dachträgereinrichtung für ein Kraftfahrzeug vorzustellen, welche diesen Nachteil nicht aufweist, sondern vielmehr eine zuverlässige, einfache und verschleißarme Erkennung des Lastenträgers auf der Dachreling gewährleistet und zudem eine gefällige Optik aufweist.

Dies wird erfindungsgemäß mit einer Dachträgereinrichtung mit den Merkmalen des Anspruchs 1 erreicht. Dabei ist vorgesehen, dass der Lastenträger zumindest einen Befestigungsvorsprung aufweist, der bei der Montage des Lastenträgers auf der Dachreling durch eine Ausnehmung der Dachreling in diese eingreift und dort mit zumindest einer Befestigungsaufnahme zum Halten des Lastenträgers zusammenwirkt, wobei die Ausnehmung in nicht montiertem Zustand des Lastenträgers mittels einer Abdeckung verschließbar und ein Abdeckungszustand der Ausnehmung mittels einer Erfassungeinrichtung berührungslos feststellbar ist, wobei der Abdeckungszustand wiedergibt, ob die Ausnehmung von der Abdeckung verschlossen oder wenigstens teilweise freigegeben ist, und wobei auf das Vorliegen des Lastenträgers an der Dachreling erkannt wird, wenn die Ausnehmung von der Abdeckung wenigstens teilweise freigegeben ist. Zum Befestigen des Lastenträgers an der Dachreling während der Montage ist der Befestigungsvorsprung an dem Lastenträger vorgesehen, wobei sich der Befestigungsvorsprung bei entsprechender Ausrichtung des Lastenträgers in Richtung der Dachreling beziehungsweise des Fahrzeugdachs erstreckt. Die Dachreling weist dagegen die wenigstens eine Befestigungsaufnahme auf, in welche der Befestigungsvorsprung bei der Montage des Lastenträgers eingreift, sodass dieser nachfolgend sicher an der Dachreling gehalten ist. Die Befestigungsaufnahme ist dabei in der Dachreling angeordnet und bezüglich dieser festgesetzt, sodass der Befestigungsvorsprung zunächst durch die Aufnahme in die Dachreling eingreifen muss, um nachfolgend mit der Befestigungsaufnahme zum Halten des Lastenträgers zusammenwirken zu können.

Die Befestigungsaufnahme liegt bevorzugt vollständig oberhalb des Fahrzeugdachs vor, ist also insbesondere nicht in einer Dachfuge oder einer ähnlichen Ausnehmung des Fahrzeugdachs angeordnet. Um besonders gute optische Eigenschaften zu erzielen, soll die Abdeckung vorgesehen sein, welche die Ausnehmung verschließt, wenn der Lastenträger nicht montiert ist. Bevorzugt verschließt die Abdeckung die Ausnehmung in diesem Fall vollständig. Die Ausnehmung und der Lastenträger können in einer vorteilhaften Ausführungsform zusätzlich derart ausgebildet sein, dass der Lastenträger die Ausnehmung abdeckt, wenn er auf der Dachreling montiert ist. Auch hier ist bevorzugt eine vollständige Abdeckung vorgesehen. Die Ausnehmung der Dachreling kann also stets optisch vorteilhaft verschlossen beziehungsweise abgedeckt sein. Allenfalls lassen sich somit in nicht montiertem Zustand des Lastenträgers Umrisse der Abdeckung erkennen, welche jedoch den optischen Gesamteindruck der Dachträgereinrichtung nicht beeinträchtigen.

Der Befestigungsvorsprung und die Befestigungsaufnahme können beispielsweise als Gewindebolzen und dazugehörige Gewindebohrung beziehungsweise dazugehöriger Gewindeeinsatz ausgebildet sein. Ebenso kann der Befestigungsvorsprung in Form eines Kugelsperrbolzens vorliegen, welcher an dem Lastenträger gehalten ist. Alternativ dazu können der Befestigungsvorsprung und die Befestigungsaufnahme über Bajonettverschlusseinrichtungen verfügen, welche bei der Montage miteinander zum Halten des Lastenträgers an der Dachreling zusammenwirken. Befestigungsvorsprung und Befestigungsaufnahme können auch über Verhakungs- oder Verrastungseinrichtungen verfügen. Insgesamt ist vorgesehen, dass der Befestigungsvorsprung in die Befestigungsaufnahme eingreift und dort vorzugsweise mithilfe einer formschlüssigen Verbindung gehalten ist. Daraus resultiert eine sehr hohe Sicherheit der Dachträgereinrichtung, weil diese in allen Fahrsituationen stets zuverlässig an dem Fahrzeug gehalten ist.

Eine derartige Ausführungsform erlaubt auch das zuverlässige Feststellen, ob ein Lastenträger an der Dachreling vorliegt. Zu diesem Zweck wird nicht das Vorhandensein des Dachträgers selbst, sondern vielmehr die Stellung der Abdeckung hinsichtlich der Befestigungsaufnahme festgestellt. Es ist nämlich unerlässlich, dass die Abdeckung zur Montage des Lastenträgers an der Dachreling geöffnet wird. Damit gibt es zwei eindeutige Zustände, die vorzugsweise berührungslos erfasst und nachfolgend beispielsweise dem Steuergerät zugeführt werden können. Ist die Ausnehmung von der Abdeckung wenigstens teilweise verschlossen, insbesondere vollständig verschlossen, so ist der Lastenträger mit Sicherheit nicht an der Dachreling montiert. Ist dagegen die Ausnehmung nicht von der Abdeckung verschlossen, insbesondere vollständig freigegeben, so wird auf das Vorliegen des Lastenträgers an der Dachreling erkannt. Dies hat den Vorteil, dass das Fahrzeug auch bei beschädigter oder sogar gänzlich fehlender Abdeckung immer in der sicheren Betriebsart betrieben wird. Ist die Ausnehmung nicht mithilfe der Abdeckung verschlossen und ist der Lastenträger nicht an der Dachreling montiert, so ist die Optik des Fahrzeugs beeinträchtigt. Dies führt dazu, dass der Fahrer des Kraftfahrzeugs die Ausnehmung bewusst mithilfe der Abdeckung verschließen wird, sodass das Fahrzeug nunmehr wieder in der entsprechenden Betriebsart betrieben werden kann. Die Abdeckung ist vorzugsweise derart ausgeführt, dass sich die Ausnehmung nicht verschließen lässt, wenn der Lastenträger an der Dachreling vorliegt. Zusätzlich kann es vorgesehen sein, dass der Lastenträger und/oder die Dachreling derart ausgebildet sind, dass sich der Lastenträger nur in einer bestimmten Position auf die Dachreling aufsetzen lässt.

Insgesamt ist also die Erfassungseinrichtung vorgesehen, mittels welcher der Abdeckungszustand der Ausnehmung festgestellt werden kann. Der Abdeckungszustand gibt dabei beispielsweise wieder, ob die Ausnehmung entweder von der Abdeckung, insbesondere vollständig, verschlossen oder wenigstens teilweise, insbesondere vollständig, freigegeben ist. Dieser Abdeckungszustand kann dem Steuergerät zur Verfügung gestellt werden, sodass dieses das Kraftfahrzeug in der entsprechenden Betriebsart betreiben kann.

Eine Weiterbildung der Erfindung sieht vor, dass die Befestigungsaufnahme in einem Befestigungselement vorliegt, das in einer Aufnahme der Dachreling angeordnet, insbesondere dort befestigt ist. Die Befestigungsaufnahme ist also nicht an der Dachreling selbst ausgebildet, sondern in dem Befestigungselement. Dieses ist in der Dachreling beziehungsweise in der entsprechenden Aufnahme der Dachreling angeordnet. Beispielsweise ist die Aufnahme derart ausgebildet, dass das Befestigungselement in ihr ortsfest gehalten ist. Dazu liegt die Aufnahme beispielsweise formangepasst beziehungsweise abmessungsangepasst zu dem Befestigungselement vor. Zusätzlich kann das Befestigungselement selbstverständlich befestigt sein, beispielsweise an der Dachreling und/oder an dem Fahrzeugdach, insbesondere mittels einer lösbaren Verbindung, wie vorzugsweise einer Schraubverbindung. Zum Beispiel ist das Befestigungselement ausschließlich an der Dachreling oder ausschließlich an dem Fahrzeugdach befestigt. In letzterem Fall ist also keine spezielle Befestigung des Befestigungselements an der Dachreling vorgesehen. Alternativ kann selbstverständlich die Befestigungsaufnahme auch an beziehungsweise in der Dachreling ausgebildet sein, beispielsweise durch Vorsehen einer entsprechenden Bohrung in einem unterhalb der Ausnehmung liegenden Bereich der Dachreling.

Eine Weiterbildung der Erfindung sieht vor, dass die Abdeckung als Klappe ausgebildet und schwenkbar an der Dachreling und/oder dem Befestigungselement gelagert ist. Die Abdeckung soll also unverlierbar bezüglich der Dachreling gehalten sein. Zu diesem Zweck liegt sie als Klappe vor, welche um eine Schwenkachse drehbar befestigt ist, beispielsweise an der Dachreling. Alternativ kann auch eine Befestigung an dem Befestigungselement vorgesehen sein, sodass die Klappe nicht unmittelbar an der Dachreling befestigt beziehungsweise gelagert ist. Vielmehr ist sie derart an dem Befestigungselement angeordnet, dass sie nach dem Anbringen von Befestigungselement und Dachreling an dem Fahrzeugdach des Kraftfahrzeugs bei entsprechender Anordnung zum Verschließen der Ausnehmung dient.

Eine Weiterbildung der Erfindung sieht vor, dass die Abdeckung einen Betätigungsbereich aufweist, der bei der Montage des Lastenträgers an der Dachreling mit einem Betätigungsvorsprung des Lastenträgers zum Freigeben der Ausnehmung durch die Abdeckung zusammenwirkt. Eine solche Ausführungsform ist insbesondere vorteilhaft, wenn die Abdeckung als Klappe vorliegt. In diesem Fall kann der Betätigungsbereich auf einer Seite der Drehachse derart angeordnet sein, dass bei Kraftausübung auf ihn eine Drehung der Klappe zum Freigeben der Ausnehmung erfolgt, wobei diese beispielsweise zumindest teilweise auf einer dem Betätigungsbereich bezüglich der Drehachse gegenüberliegenden Seite der Klappe vorliegt. Die Kraftausübung kann beispielsweise manuell durch einen Benutzer der Dachträgereinrichtung erfolgen. Besonders bevorzugt ist es jedoch, wenn der Lastenträger den Betätigungsvorsprung aufweist, der bei der Montage des Lastenträgers derart in Kontakt mit dem Betätigungsbereich tritt, dass die Ausnehmung automatisch freigegeben wird, sodass nachfolgend der Befestigungsvorsprung in die nun freigegebene Befestigungsaufnahme eingreifen kann.

Eine Weiterbildung der Erfindung sieht vor, dass die Erfassungseinrichtung wenigstens einen Magnet und zumindest einen Magnetfeldsensor aufweist. Dies erlaubt eine äußerst einfache und verschleißarme Ausbildung der Erfassungseinrichtung, weil der Magnet und der Magnetfeldsensor üblicherweise keine beweglichen Elemente aufweisen. Dazu ist der Magnetfeldsensor- der auch als Magnetometer bezeichnet werden kann - beispielsweise als Hall-Sensor, XMR-Sensor oder dergleichen ausgeführt. Der Magnet und der Magnetfeldsensor sind derart zueinander angeordnet, dass sie durch die Verlagerung der Abdeckung bezüglich der Ausnehmung zum Verschließen oder Freigeben derselben in unterschiedliche Relativpositionen zueinander gebracht werden. Beispielsweise ist der Magnet bei Anordnung der Abdeckung zum Verschließen der Abdeckung (Geschlossenstellung) näher an dem Magnetfeldsensor angeordnet als bei freigegebener Ausnehmung (Offenstellung). Mithilfe des Magnetfeldsensors kann nun festgestellt werden, ob sich der Magnet in dessen Nähe befindet, und entsprechend auf die Anordnung der Abdeckung bezüglich der Ausnehmung geschlossen werden.

Eine Weiterbildung der Erfindung sieht vor, dass der Magnet zumindest in einer Geschlossenstellung der Abdeckung eine Zuhaltekraft auf die die Abdeckung bewirkt. Das bedeutet, dass eine Magnetkraft des Magnets die Abdeckung in ihre Geschlossenstellung drängt, in welcher sie die Ausnehmung verschließt, insbesondere vollständig verschließt. Somit müssen bei geeigneter Auslegung des Magnets keine weiteren Mittel vorgesehen werden, um die Abdeckung in ihrer Geschlossenstellung zu halten. Insbesondere muss die Magnetkraft ausreichend groß sein und die Abdeckung mindestens teilweise aus einem magnetisierbaren Material bestehen, sodass sie von dem Magnet angezogen wird.

Eine Weiterbildung der Erfindung sieht vor, dass der Magnet an der Abdeckung und der Magnetfeldsensor an der Dachreling oder dem die Befestigungsaufnahme aufweisenden Befestigungselement befestigt ist. Der Magnet und der Magnetfeldsensor sind bei einer solchen Ausführungsform zueinander verlagerbar. Selbstverständlich kann auch die umgekehrte Anordnung gewählt werden, bei welcher der Magnet an der Dachreling beziehungsweise dem Befestigungselement und der Magnetfeldsensor an der Abdeckung vorgesehen ist.

Eine Weiterbildung der Erfindung sieht vor, dass der Magnet und der Magnetfeldsensor an der Dachreling oder dem Befestigungselement befestigt sind und die Abdeckung ein magnetisches Joch aufweist, über das in der Geschlossenstellung der Abdeckung ein Magnetfluss zwischen dem Magnet und dem Magnetfeldsensor vorliegt. Alternativ zu der Ausführungsform, bei welcher das Verlagern von Magnet und Magnetfeldsensor relativ zueinander vorgesehen ist, kann auch eine Ausführungsform gewählt werden, bei welcher lediglich der Magnetfluss zwischen dem Magnet und dem Magnetfeldsensor durch die unterschiedlichen Anordnungen der Abdeckung beeinflusst wird. Entsprechend können sowohl der Magnet als auch der Magnetfeldsensor an der Dachreling oder dem Befestigungselement angeordnet, also nicht selbst zueinander beweglich sein. Die Abdeckung weist nun das magnetische Joch auf beziehungsweise bildet dieses aus. Das magnetische Joch besteht aus einem magnetisierbaren Material, über welches der Magnetfluss zwischen dem Magnet und dem Magnetfeldsensor zumindest dann übertragen wird, wenn sich die Abdeckung in der Geschlossenstellung befindet. Wird die Abdeckung von der Ausnehmung entfernt, beispielsweise die Klappe aufgeklappt, so verändert sich die Position des magnetischen Jochs, sodass der Magnetfluss zwischen dem Magnet und dem Magnetfeldsensor verändert wird, insbesondere abnimmt. Dies wird von dem Magnetfeldsensor festgestellt, sodass auf das Entfernen der Abdeckung von der Ausnehmung beziehungsweise das Verlagern der Abdeckung in die Offenstellung erkannt werden kann. Besonders vorteilhaft dient das magnetische Joch als magnetisches Element, auf welches der Magnet die vorstehend beschriebene Zuhaltekraft ausübt.

Es kann weiterhin vorgesehen sein, dass das Befestigungselement nach der Befestigung der Dachreling an dem Fahrzeugdach auf diesem aufliegt. Es ist also vorgesehen, dass sich das Befestigungselement an dem Fahrzeugdach abstützt, um die über den Lastenträger aufgebrachten Kräfte an dieses abzuleiten. Beispielsweise liegt dazu das Befestigungselement derart an der Dachreling vor, dass es nach der Befestigung der Dachreling ohne weiteres Zutun an dem Fahrzeugdach anliegt. Alternativ kann es selbstverständlich vorgesehen sein, zunächst das Befestigungselement an dem Fahrzeugdach anzuordnen und/oder zu befestigen und nachfolgend die Dachreling an dem Fahrzeugdach anzubringen beziehungsweise zu befestigen, wobei das Befestigungselement in der Aufnahme der Dachreling zu liegen kommt.

Alternativ oder zusätzlich kann es vorgesehen sein, dass das Befestigungselement nach der Befestigung der Dachreling an dem Fahrzeugdach nur über die Dachreling mit dem Fahrzeugdach verbunden ist. Es ist also vorgesehen, dass die Dachreling nur an dem Fahrzeugdach und das Befestigungselement nur an der Dachreling befestigt ist. Es liegt also keine unmittelbare Verbindung beziehungsweise kein unmittelbarer Kontakt zwischen dem Befestigungselement und dem Fahrzeugdach vor. Entsprechend werden von dem Lastenträger aufgebrachte Kräfte ausschließlich über das Befestigungselement in die Dachreling und nachfolgend in das Fahrzeugdach eingetragen. Beispielsweise ist es bei einer solchen Ausführungsform vorgesehen, dass das Befestigungselement in vertikaler Richtung von dem Fahrzeugdach beabstandet ist, sodass auch die Befestigungsaufnahme oberhalb des Fahrzeugdachs vorliegt. Entsprechend kann das Befestigungselement beispielsweise in einem Bereich der Dachreling vorliegen, in welchem diese nicht an dem Fahrzeugdach anliegt, sondern vielmehr von ihm beabstandet ist.

Eine weitere Ausgestaltung der Erfindung sieht vor, dass der Lastenträger nur über das wenigstens eine Befestigungselement an der Dachreling befestigt ist. Es sind außer dem Befestigungselement also keine weiteren Befestigungseinrichtungen vorgesehen, um den Lastenträger an der Dachreling zu halten. Insbesondere sind keine weiteren Kraftschlusselemente oder Formschlusselemente, beispielsweise Profilnasen oder dergleichen, zur Befestigung des Lastenträgers notwendig. Dies macht es möglich, die Dachreling als Strangpressprofil auszubilden. Zudem wird die Optik durch den Wegfall der Profilnasen und ähnlicher Elemente deutlich verbessert. Selbstverständlich kann jedoch der Lastenträger wenigstens einen Abstützbereich aufweisen, mit welchem er nach der Montage in Auflagekontakt mit einem entsprechenden Abstützgegenbereich der Dachreling steht. Unter dem Befestigen des Lastenträgers an der Dachreling ist mithin bevorzugt lediglich das Halten in den im Wesentlichen senkrecht auf dem Schwerkraftvektor stehenden Richtungen zu verstehen, also insbesondere in Längsrichtung und in lateraler Richtung. Ein Halten beziehungsweise Abstützen in vertikaler Richtung, also in Richtung der Dachreling, wird demnach vorzugsweise sowohl durch das Befestigungselement als auch das Zusammenwirken von Abstützbereich und Abstützgegenbereich erzielt.

In einer bevorzugten Weiterbildung ist eine Drainageleitung vorgesehen, die mit ihrer einen Seite in der Befestigungsaufnahme einmündet und mit ihrer anderen Seite an eine Umgebung der Dachträgereinrichtung zum Abführen von Fluid aus der Befestigungsaufnahme angeschlossen ist. Trotz der Abdeckung oder der Anordnung des Lastenträgers über der Ausnehmung beziehungsweise der Befestigungsaufnahme kann es vorkommen, dass Feuchtigkeit, insbesondere Regen oder dergleichen, in die Befestigungsaufnahme gelangt. Dies kann die Funktion der Erfassungseinrichtung beeinträchtigen. Daher soll die Feuchtigkeit möglichst rasch aus der Befestigungsaufnahme abgeführt werden. Zu diesem Zweck ist die Drainageleitung vorgesehen. Diese ist fluidtechnisch an die Befestigungsaufnahme angeschlossen, bevorzugt an einem dem Fahrzeugdach zugewandten Ende der Befestigungsaufnahme, falls diese oberhalb des Fahrzeugdachs endet. Entsprechend kann sich in der Befestigungsaufnahme keine Feuchtigkeit ansammeln. Die Drainageleitung führt von der Befestigungsaufnahme in Richtung der Umgebung der Dachträgereinrichtung. Dabei ist sie derart geneigt, dass bei zu erwartenden Untergrundneigungen des Kraftfahrzeugs ein zuverlässiges Abführen der Feuchtigkeit aufgrund von Schwerkrafteinfluss gewährleistet ist.

Schließlich kann vorgesehen sein, dass die Drainageleitung mit ihrer der Befestigungsaufnahme abgewandten Seite in eine Drainageaussparung der Dachreling einmündet, die insbesondere von einer randoffenen Ausnehmung der Dachreling auf ihrer dem Fahrzeugdach zugewandten Seite gebildet ist. Die Drainageleitung liegt also beispielsweise lediglich in dem Befestigungselement vor und mündet zum Abführen der Feuchtigkeit in eine Seitenfläche von diesem ein. Um die Feuchtigkeit in die Umgebung abführen zu können, ist die Drainageaussparung der Dachreling vorgesehen. Die Feuchtigkeit gelangt also aus der Befestigungsaufnahme in die Drainageleitung und von dieser über die Drainageaussparung in die Umgebung der Dachträgereinrichtung. Die Drainageaussparung kann beispielsweise eine randgeschlossene Ausnehmung, also insbesondere eine Bohrung oder dergleichen sein. Besonders bevorzugt liegt sie jedoch als randoffene Ausnehmung der Dachreling vor. Dazu durchgreift die Drainageaussparung eine dem Fahrzeugdach zugewandte Seite der Dachreling. Eine derartige Ausführung ist besonders einfach herstellbar und zudem optisch vorteilhaft, weil die Ausnehmung im Bereich des Fahrzeugdachs kaum auffällt.

Die Erfindung betrifft weiterhin ein Verfahren zum Betreiben eines Steuergeräts eines Kraftfahrzeugs mit einer Dachträgereinrichtung, insbesondere gemäß den vorstehenden Ausführungen, wobei die Dachträgereinrichtung eine auf einem Fahrzeugdach des Kraftfahrzeugs befestigbare Dachreling und einen auf der Dachreling montierbaren Lastenträger aufweist. Dabei ist vorgesehen, dass der Lastenträger zumindest einen Befestigungsvorsprung aufweist, der bei der Montage des Lastenträgers auf der Dachreling durch eine Ausnehmung der Dachreling in diese eingreift und dort mit zumindest einer Befestigungsaufnahme zum Halten des Lastenträgers zusammenwirkt. Dabei soll die Ausnehmung in nicht montiertem Zustand des Lastenträgers mittels einer Abdeckung verschließbar und ein Abdeckungszustand der Ausnehmung mittels einer Erfassungseinrichtung berührungslos feststellbar sein, wobei der Abdeckungszustand wiedergibt, ob die Ausnehmung von der Abdeckung verschlossen oder wenigstens teilweise freigegeben ist, und wobei auf das Vorliegen des Lastenträgers an der Dachreling erkannt wird, wenn die Ausnehmung von der Abdeckung wenigstens teilweise freigegeben ist. Weiterhin soll das Steuergerät zumindest eine Einrichtung des Kraftfahrzeugs bei geschlossener Ausnehmung in einer ersten Betriebsart und bei wenigstens teilweise offener Ausnehmung in einer zweiten Betriebsart betreiben. Die Einrichtung ist beispielsweise eine Fahrerassistenzeinrichtung, also insbesondere eine ESP-Einrichtung oder dergleichen. Auf die Vorteile einer derartigen Vorgehensweise wurde bereits eingangs hingewiesen, sodass insoweit auf die vorstehenden Ausführungen Bezug genommen wird.

Die Erfindung betrifft weiterhin ein Steuergerät eines Kraftfahrzeugs mit einer Dachträgereinrichtung, welche gemäß den vorstehenden Ausführungen ausgebildet ist. Das Steuergerät ist dazu ausgebildet, zumindest eine Einrichtung des Kraftfahrzeugs bei geschlossener Ausnehmung in einer ersten Betriebsart und bei wenigstens teilweise offener Ausnehmung in einer zweiten Betriebsart zu betreiben. Das Verfahren und die Dachträgereinrichtung können selbstredend gemäß den vorstehenden Ausführungen weitergebildet sein.

Die Erfindung ist auch auf ein Kraftfahrzeug gerichtet, welches die vorstehend beschriebene Dachträgereinrichtung und das genannte Steuergerät aufweist.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung der Dachträgereinrichtung,
- Figur 2: eine Detailansicht eines Bereichs einer Dachreling der Dachträgereinrichtung, wobei ein Befestigungselement erkennbar ist,
- Figur 3: eine Detailschnittdarstellung der Dachreling sowie des Befestigungselements,
- Figur 4: eine Ansicht eines Bereichs der Dachträgereinrichtung mit einer Erfassungseinrichtung in einer ersten Ausführungsform,
- Figur 5: eine Ansicht des Bereichs der Dachträgereinrichtung mit der Erfassungseinrichtung in einer zweiten Ausführungsform, und
- Figur 6: einen Querschnitt durch den in der Figur 5 gezeigten Bereich der Dachträgereinrichtung.

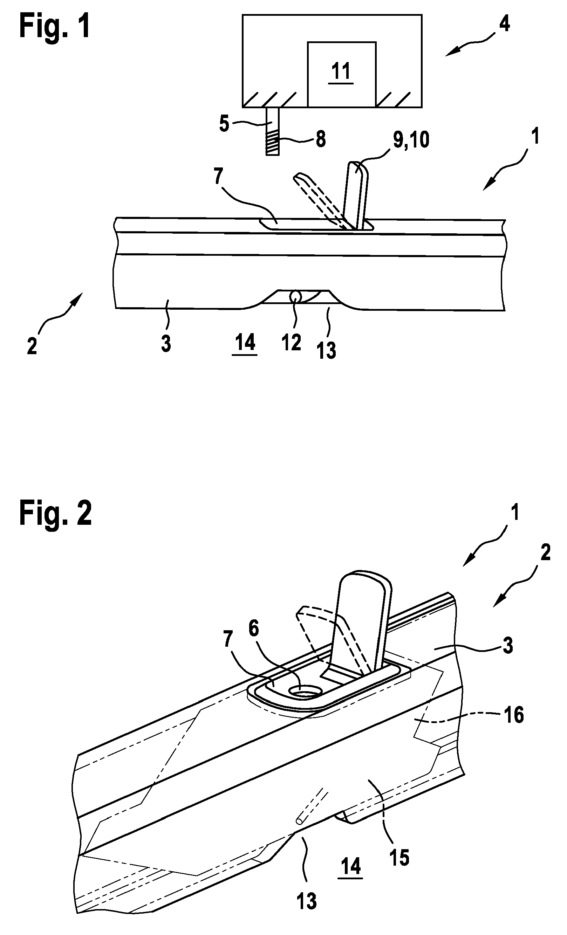

Die Figur 1 zeigt eine Seitenansicht einer Dachträgereinrichtung 1 für ein Kraftfahrzeug. Die Dachträgereinrichtung 1 besteht aus einer Dachreling 2 mit wenigstens einer Dachleiste 3 und aus einem hier lediglich schematisch dargestellten Lastenträger 4. Die Dachreling 2 ist auf dem Fahrzeugdach (hier nicht dargestellt) befestigbar beziehungsweise befestigt. Die ihr zugeordnete Dachleiste 3 liegt beispielsweise über ihre gesamte Länge auf dem Fahrzeugdach auf. Es kann jedoch auch vorgesehen sein, dass sie lediglich über wenigstens zwei Dachleitenfüße in Kontakt mit dem Fahrzeugdach steht. Die Dachleistenfüße sind beispielsweise an freien Enden der Dachleiste 3 angeordnet. Zwischen den Dachleistenfüßen kann die Dachleiste 3 von dem Fahrzeugdach beabstandet sein. In der hier vorliegenden Ausführungsform soll die Dachleiste 3 über ihre gesamte Länge auf dem Fahrzeugdach anliegen. Bevorzugt ist die Dachreling 2 permanent an dem Fahrzeugdach befestigt, während der Lastenträger 4 lediglich bei Bedarf an der Dachreling 2 montiert wird. Beispielsweise liegen zwei zueinander parallel angeordnete Dachleisten 3 vor, welche sich in Längsrichtung des Kraftfahrzeugs über das Fahrzeugdach hinweg erstrecken.

Der Lastenträger 4 ist bevorzugt zum unmittelbaren Aufnehmen von Lasten geeignet oder zumindest mit einer entsprechenden Aufnahmevorrichtung verbunden beziehungsweise verbindbar. Er besteht zum Beispiel aus wenigstens einer Querstrebe, welche auf der Dachleiste 3 beziehungsweise den Dachleisten 3 anordenbar ist. Der Lastenträger 4 verfügt über wenigstens einen Befestigungsvorsprung 5, welcher mit einer hier nicht erkennbaren Befestigungsaufnahme 6 der Dachreling 2 zum Halten des Lastenträgers 4 an der Dachreling 2 zusammenwirkt. Bei der Montage des Lastenträgers 4 an der Dachreling 2 durchgreift der Befestigungsvorsprung 5 eine Ausnehmung 7 der Dachreling 2 und kann nachfolgend in die in der Dachreling 2 beziehungsweise der Dachleiste 3 angeordnete Befestigungsaufnahme 6 eingreifen. Der Befestigungsvorsprung 5 liegt beispielsweise als Gewindebolzen vor, weist also ein Gewinde 8 auf, welches mit einem Gegengewinde der Befestigungsaufnahme 6 zum Halten des Lastenträgers 4 zusammenwirken kann.

Zum Verschließen der Ausnehmung 7, während der Lastenträger 4 nicht an der Dachreling 2 montiert ist, ist eine Abdeckung 9 vorgesehen, welche hier in zwei unterschiedlichen Stellungen angedeutet ist. Die Abdeckung 9 ist dabei derart ausgebildet, dass sie die Ausnehmung 7 in nicht montiertem Zustand des Lastenträgers 4 vollständig verschließt. Insbesondere entspricht eine Außenkontur der Abdeckung 9 einer Innenkontur der Ausnehmung 7 im Wesentlichen. In montiertem Zustand des Lastenträgers 4 ist es dagegen vorgesehen, dass die Abdeckung 9 die Ausnehmung 7 derart freigibt, dass der Befestigungsvorsprung 5 durch die Ausnehmung 7 hindurch zu der Befestigungsaufnahme 6 gelangen kann. Der Lastenträger 4 soll dabei derart angeordnet sein, dass er in montiertem Zustand die Ausnehmung 7 bevorzugt vollständig abdeckt. Er weist zu diesem Zweck entsprechende Abmessungen auf.

Die Abdeckung 9 ist in dem vorliegenden Ausführungsbeispiel als Klappe 10 ausgebildet, die um eine Schwenkachse schwenkbar bezüglich der Dachreling 2 gelagert ist. Die Abdeckung 9 ist also mithin unverlierbar an der Dachreling 2 gehalten. Entsprechend weist der Lastenträger 4 einen Hohlraum 11 auf, in welchem die Klappe 10 nach der Montage des Lastenträgers 4 an der Dachreling 2 wenigstens bereichsweise eingreift. Besonders bevorzugt kann es vorgesehen sein, dass die Abdeckung 9 beziehungsweise die Klappe 10 einen hier nicht erkennbaren Betätigungsbereich aufweist. In der hier gewählten Darstellung liegt dieser Betätigungsbereich rechts von der Drehachse der Klappe 10. Bei Ausübung einer in Richtung des Fahrzeugdachs gerichteten Kraft auf diesen Betätigungsbereich wird ein Drehmoment auf die Klappe 10 bewirkt, durch welches die Klappe 10 derart verschwenkt wird, dass die Ausnehmung 7 freigegeben wird. Zusätzlich kann es vorgesehen sein, dass an dem Lastenträger 4 ein Betätigungsvorsprung vorliegt, welcher bei der Montage des Lastenträgers 4 an der Dachreling 2 zum Freigeben der Ausnehmung 7 mit dem Betätigungsbereich zusammenwirkt. Nachfolgend kann der Befestigungsvorsprung 5 durch die Ausnehmung 7 hindurchtreten und die Klappe 10 wenigstens bereichsweise in den Hohlraum 11 gelangen.

Erkennbar ist auch ein Bereich einer Drainageleitung 12, welche von der Befestigungsaufnahme 6 zu einer Drainageaussparung 13 der Dachreling 2 beziehungsweise der Dachleiste 3 verläuft. Durch diese Drainageleitung 12 kann Feuchtigkeit aus der Befestigungsaufnahme 6 in Richtung einer Umgebung 14 der Dachträgereinrichtung 1 abgeführt werden. Die Drainageaussparung 13 ist dabei randoffen in der Dachreling 2 ausgebildet, sodass eine dem Fahrzeugdach zugewandte Seite der Dachreling 2 durchgriffen ist. Auf diese Weise wird eine optisch unauffällige Ableitung der Feuchtigkeit realisiert.

Die Figur 2 zeigt eine Detailansicht eines Bereichs der Dachreling 2. Hier ist nun erkennbar, dass die Befestigungsaufnahme 6 in einem Befestigungselement 15 vorliegt, welches innerhalb der Dachleiste 3 angeordnet ist. Dabei sitzt es in der hier dargestellten Ausführungsform auf dem Fahrzeugdach auf, stützt sich also an diesem ab. Zusätzlich kann es an dem Fahrzeugdach, beispielsweise mittels einer Schraubverbindung, befestigt sein. Das Befestigungselement 15 ist insoweit in einer Aufnahme 16 der Dachreling 2 angeordnet. Besonders bevorzugt ist es vorgesehen, dass die Abdeckung 9 beziehungsweise die Klappe 10 an dem Befestigungselement 15 gelagert ist, also nicht unmittelbar an der Dachreling 2. Auf diese Weise wird eine besonders einfache und kostengünstige Herstellung der Dachreling 2 ermöglicht.

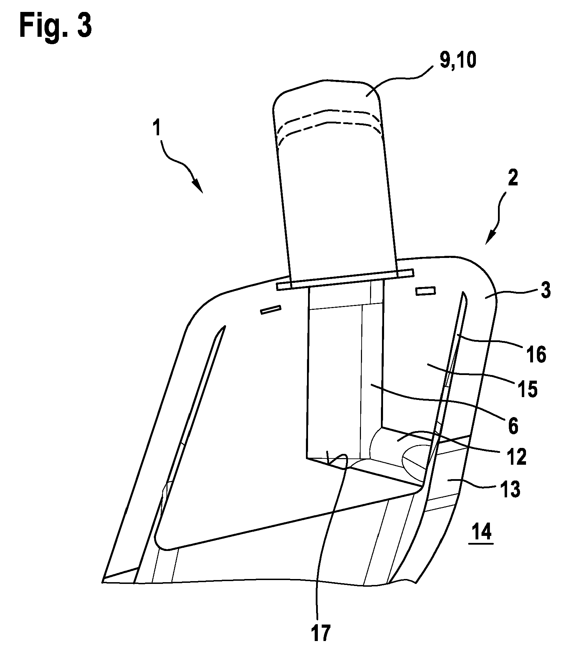

Die Figur 3 zeigt eine weitere Detailansicht der Dachreling 2 sowie des Befestigungselements 15. Hier ist nun deutlich erkennbar, dass die Befestigungsaufnahme 6 lediglich in dem Befestigungselement 15 vorliegt. Sie kann beispielsweise, wie hier dargestellt, als Sackloch vorliegen, also das Befestigungselement 15 in Richtung des Fahrzeugdachs nicht vollständig durchgreifen. Insbesondere liegt die Befestigungsaufnahme 6 vollständig über dem Fahrzeugdach beziehungsweise in vertikaler Richtung beabstandet zu diesem vor. Es kann auch vorgesehen sein, dass das Befestigungselement 15 nicht bis zu dem Fahrzeugdach ragt, sondern vielmehr lediglich über die Dachreling 2 an diesem befestigt ist. Deutlich zu erkennen ist in der hier gewählten Darstellung ebenfalls die Drainageleitung 12, welche im Bereich eines Grunds 17 der Befestigungsaufnahme 6 in diese einmündet. Entsprechend kann sich in der Befestigungsaufnahme 6 keine Feuchtigkeit ansammeln. Die Drainageleitung 12 weist von der Befestigungsaufnahme 6 bis zu der Drainageaussparung 13 ein Gefälle auf, welches ein zuverlässiges Abführen der Feuchtigkeit aus der Befestigungsaufnahme 6 bei den zu erwartenden Untergrundneigungswinkeln des Fahrzeugs sicherstellt.

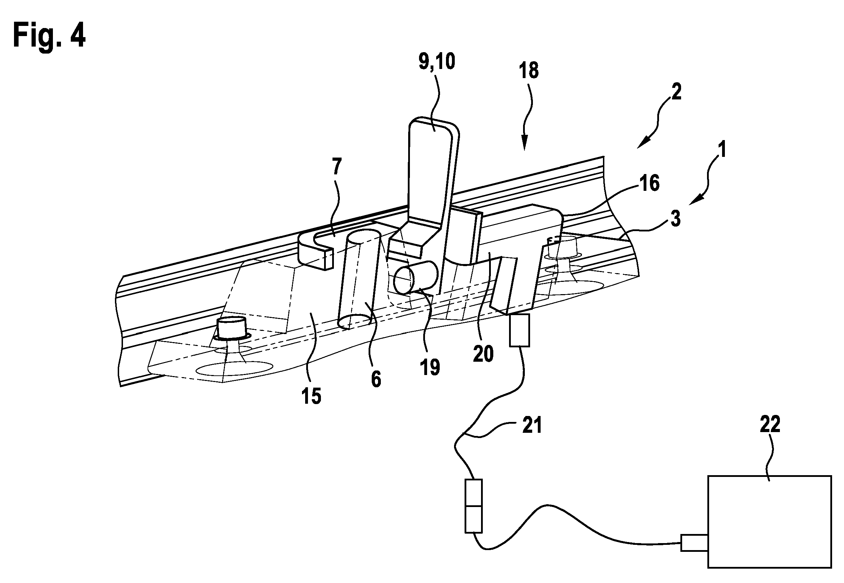

Die Figur 4 zeigt einen Bereich der Dachträgereinrichtung 1 mit einer Erfassungseinrichtung 18 für einen Abdeckungszustand der Ausnehmung 7 in einer ersten Ausführungsform. Die Erfassungseinrichtung 18 besteht zumindest aus einem Magnet 19 und einem Magnetfeldsensor 20. Letzterer ist beispielsweise als Hall-Sensor ausgeführt. Der Magnet 19 ist an der Abdeckung 9 beziehungsweise Klappe 10 angeordnet, also zusammen mit dieser verlagerbar. Der Magnetfeldsensor 20 ist dagegen ortsfest in der Dachreling 2 beziehungsweise vorteilhafterweise in dem Befestigungselement 15 angeordnet. Er ist beispielsweise über eine Leitung 21 mit einem Steuergerät 22 verbunden. Mithilfe der Erfassungseinrichtung 18 ist der Abdeckungszustand der Ausnehmung 7 feststellbar. Dabei wird in der hier dargestellten Ausführungsform das von dem Magnet 19 erzeugte Magnetfeld von dem Magnetfeldsensor 20 erfasst. Ist die Abdeckung 9 geschlossen, so liegt der Magnet 19 näher bei dem Magnetfeldsensor 20 als bei geöffneter beziehungsweise entfernter Abdeckung 9. Entsprechend ist in ersterem Fall das mithilfe des Magnetfeldsensors 20 festgestellte Magnetfeld stärker als in letzterem Fall. Daher kann entsprechend der Stärke des Magnetfelds auf das Verschließen der Ausnehmung 7 durch die Abdeckung 9 beziehungsweise das Freigeben der Ausnehmung 7 geschlossen werden.

Das von dem Magnetfeldsensor 20 gemäß dem Magnetfeld erzeugte Signal wird von dem Steuergerät 22 ausgewertet. Es ist nun vorgesehen, dass das Steuergerät 22 zumindest eine Einrichtung des Kraftfahrzeugs bei geschlossener Ausnehmung 7 in einer ersten Betriebsart und bei wenigstens teilweise offener Ausnehmung 7 in einer zweiten Betriebsart betreibt. Die Einrichtung ist beispielsweise eine Fahrerassistenzeinrichtung, insbesondere eine ESP-Einrichtung. Ist die Ausnehmung 7 geschlossen, liegt also die Abdeckung 9 zum Verschließen der Ausnehmung 7 vor, so wird die erste Betriebsart gewählt, bei welcher Fahrparameter des Kraftfahrzeugs ohne Berücksichtigung des Lastenträgers 4 gewählt werden. In der zweiten Betriebsart wird dagegen die Einrichtung so angesteuert, als ob der Lastenträger 4 vorhanden und insbesondere beladen wäre. Entsprechend wird in beiden Betriebsarten ein sehr sicheres Fahrverhalten des Kraftfahrzeugs erzielt. Besonders vorteilhaft ist es, wenn an der Dachleiste 3 zusätzlich ein magnetisierbares Element vorgesehen ist, welches derart angeordnet ist, dass der Magnet 19 in der Geschlossenstellung der Abdeckung 9 ihm am nächsten gelegen ist. Entsprechend kann der Magnet 19 in der Geschlossenstellung eine Zuhaltekraft auf die Abdeckung 9 bewirken, sodass für ein Freigeben der Ausnehmung 7 diese zunächst überwunden werden muss.

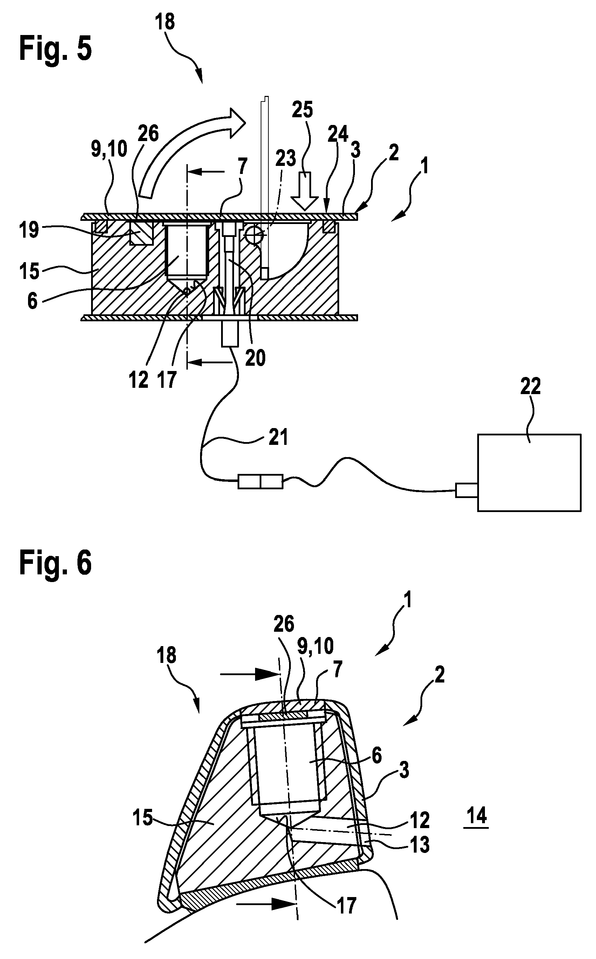

Die Figur 5 zeigt einen Bereich der Dachträgereinrichtung 1 mit einer Erfassungseinrichtung 18 in einer zweiten Ausführungsform. In dieser Darstellung wird nochmals deutlich, dass die Klappe 10 um eine Drehachse 23 schwenkbar ist und einen Betätigungsbereich 24 aufweist, bei dessen Betätigen die Ausnehmung 7 freigegeben wird. Das Betätigen erfolgt dabei durch Aufbringen einer Kraft in Richtung des Pfeils 25. Die Abdeckung 9 beziehungsweise die Klappe 10 ist wiederum in zwei unterschiedlichen Stellungen, nämlich einer Geschlossenstellung (durchgezogene Linien) und einer Offenstellung (strichpunktierte Linien) dargestellt. Der Unterschied zu der anhand der Figur 4 beschriebenen Ausführungsform liegt nun darin, dass sowohl der Magnet 19 als auch der Magnetfeldsensor 20 an dem Befestigungselement 15 angeordnet sind. Die Abdeckung 9 verfügt dagegen über ein magnetisches Joch 26. Über dieses ist in der Geschlossenstellung der Abdeckung 9 ein Magnetfluss zwischen dem Magnet 19 und dem Magnetfeldsensor 20 übertragbar. Wird die Abdeckung 9 dagegen entfernt beziehungsweise in die Offenstellung verlagert, so wird der Magnetfluss zumindest verringert oder sogar gänzlich unterbrochen. Entsprechend kann wiederum an der Stärke des Magnetfelds, die mithilfe des Magnetfeldsensors 20 erfasst wird, auf das Verschließen oder Freigeben der Ausnehmung 7 durch die Abdeckung 9 geschlossen werden. Auch hier wertet das Steuergerät 22 die entsprechenden Signale des Magnetfeldsensors 20 aus.

Die Figur 6 zeigt schließlich eine Querschnittsdarstellung des aus der Figur 5 bekannten Bereichs der Dachträgereinrichtung 1. Dabei ist erkennbar, dass auch hier die Drainageleitung 12 sowie die Drainageaussparung 13 vorgesehen sind. Auf diese Weise wird eine Beeinträchtigung der Erfassungseinrichtung 8 durch in der Befestigungsaufnahme 6 vorliegende Feuchtigkeit vermieden.

## Patentansprüche

1. Dachträgereinrichtung (1) für ein Kraftfahrzeug, mit einer auf einem Fahrzeugdach des Kraftfahrzeugs befestigbaren Dachreling (2) und einem auf der Dachreling (2) montierbaren Lastenträger (4), wobei der Lastenträger (4) zumindest einen Befestigungsvorsprung (5) aufweist, der bei der Montage des Lastenträgers (4) auf der Dachreling (2) durch eine Ausnehmung (7) der Dachreling (2) in diese eingreift und dort mit zumindest einer Befestigungsaufnahme (6) zum Halten des Lastenträgers (4) zusammenwirkt, wobei die Ausnehmung (7) in nicht montiertem Zustand des Lastenträgers (4) mittels einer Abdeckung (9) verschließbar ist, **dadurch gekennzeichnet, dass** ein Abdeckungszustand der Ausnehmung (7) mittels einer Erfassungseinrichtung (18) berührungslos feststellbar ist, wobei der Abdeckungszustand wiedergibt, ob die Ausnehmung (7) von der Abdeckung (9) verschlossen oder wenigstens teilweise freigegeben ist, und wobei auf das Vorliegen des Lastenträgers (4) an der Dachreling (2) erkannt wird, wenn die Ausnehmung (7) von der Abdeckung (9) wenigstens teilweise freigegeben ist.

2. Dachträgereinrichtung nach Anspruch 1, **dadurch gekennzeichnet, dass** die Befestigungsaufnahme (6) in einem Befestigungselement (15) vorliegt, das in einer Aufnahme (16) der Dachreling (2) angeordnet, insbesondere befestigt ist.

3. Dachträgereinrichtung nach einem der vorhergehenden Ansprüche, **dadurch gekennzeichnet, dass** die Abdeckung (9) als Klappe (10) ausgebildet und schwenkbar an der Dachreling (2) und/oder dem Befestigungselement (15) gelagert ist.

4. Dachträgereinrichtung nach einem der vorhergehenden Ansprüche, **dadurch gekennzeichnet, dass** die Abdeckung (9) einen Betätigungsbereich (24) aufweist, der bei der Montage des Lastenträgers (4) an der Dachreling (2) mit einem Betätigungsvorsprung des Lastenträgers (4) zum Freigeben der Ausnehmung (7) durch die Abdeckung (9) zusammenwirkt.

5. Dachträgereinrichtung nach einem der vorhergehenden Ansprüche, **dadurch gekennzeichnet, dass** die Erfassungseinrichtung (18) wenigstens einen Magnet (19) und zumindest einen Magnetfeldsensor (20) aufweist.

6. Dachträgereinrichtung nach einem der vorhergehenden Ansprüche, **dadurch gekennzeichnet, dass** der Magnet (19) zumindest in einer Geschlossenstellung der Abdeckung (9) eine Zuhaltekraft auf die Abdeckung (9) bewirkt.

7. Dachträgereinrichtung nach einem der vorhergehenden Ansprüche, **dadurch gekennzeichnet, dass** der Magnet (19) an der Abdeckung (9) und der Magnetfeldsensor (20) an der Dachreling (2) oder einem die Befestigungsaufnahme (6) aufweisenden Befestigungselement (15) befestigt ist.

8. Dachträgereinrichtung nach einem der vorhergehenden Ansprüche, **dadurch gekennzeichnet, dass** der Magnet (19) und der Magnetfeldsensor (20) an der Dachreling (2) oder dem Befestigungselement (15) befestigt sind und die Abdeckung (9) ein magnetisches Joch (26) aufweist, über das in der Geschlossenstellung der Abdeckung (9) ein Magnetfluss zwischen dem Magnet (19) und dem Magnetfeldsensor (20) vorliegt.

9. Verfahren zum Betreiben eines Steuergeräts (22) eines Kraftfahrzeugs mit einer Dachträgereinrichtung (1), insbesondere nach einem oder mehreren der vorhergehenden Ansprüche, wobei die Dachträgereinrichtung (1) eine auf einem Fahrzeugdach des Kraftfahrzeugs befestigbare Dachreling (2) und einen auf der Dachreling (2) montierbaren Lastenträger (4) aufweist, wobei der Lastenträger (4) zumindest einen Befestigungsvorsprung (5) aufweist, der bei der Montage des Lastenträgers (4) auf der Dachreling (2) durch eine-Ausnehmung der Dachreling (2) in diese eingreift und dort mit zumindest einer Befestigungsaufnahme (6) zum Halten des Lastenträgers (4) zusammenwirkt, wobei die Ausnehmung (7) in nicht montiertem Zustand des Lastenträgers (4) mittels einer Abdeckung (9) verschließbar ist, **dadurch gekennzeichnet, dass** ein Abdeckungszustand der Ausnehmung (7) mittels einer Erfassungseinrichtung (18) berührungslos festgestellt wird, wobei der Abdeckungszustand wiedergibt, ob die Ausnehmung (7) von der Abdeckung (9) verschlossen oder wenigstens teilweise freigegeben ist, und wobei auf das Vorliegen des Lastenträgers (4) an der Dachreling (2) erkannt wird, wenn die Ausnehmung (7) von der Abdeckung (9) wenigstens teilweise freigegeben ist, und wobei das Steuergerät (22) zumindest eine Einrichtung des Kraftfahrzeugs bei geschlossener Ausnehmung (7) in einer ersten Betriebsart und bei wenigstens teilweise offener Ausnehmung (7) in einer zweiten Betriebsart betreibt.

10. Steuergerät für ein Kraftfahrzeug mit einer Dachträgereinrichtung nach einem oder mehreren der Ansprüche 1 bis 8, **dadurch gekennzeichnet, dass** das Steuergerät (22) zur Durchführung des Verfahrens gemäß Anspruch 9 ausgebildet ist.

## Claims

1. Roof rack device (1) for a motor vehicle with a roof rail (2) that can be fastened to a roof of the motor vehicle and a load carrier (4) that can be mounted on the roof rail (2), wherein the load carrier (4) has at least one fastening projection (5) which on assembly of the load carrier (4) on the roof rail (2) engages with the roof rail (2) through a recess (7) therein and there interacts with at least one fastening socket (6) for holding the load carrier (4), wherein in the non-mounted state of the load carrier (4) the recess (7) can be closed by means of a cover (9), **characterised in that** a state of covering of the recess (7) can be detected in a contact-less manner by a recording device (18), wherein the state of covering indicates whether the recess (7) is closed by the cover (9) or is at least partially uncovered, and wherein the presence of the load carrier (4) on the roof rail (2) can be recognised if the recess (7) is at partially uncovered by the cover (9).

2. Roof rack device according to claim 1 **characterised in that** the fastening socket (6) is located in a fastening element (15) which is arranged, more particularly attached, in a recess (16) of the roof rail (2).

3. Roof rack device according to any one of the preceding claims **characterised in that** the cover (9) is designed in the form of a flap (10) and is held in a pivoting manner on the roof rail (2) and/or the fastening element (15).

4. Roof rack device according to any one of the preceding claims **characterised in that** the cover (9) has an operating area (24), which during assembly of the load carrier (4) on the roof rail (2) interacts with an operating projection of the load carrier (4) in order for the cover (9) to clear the recess (7).

5. Roof rack device according to any one of the preceding claims **characterised in that** the recording device (18) has at least one magnet (19) and at least one magnetic field sensor (20).

6. Roof rack device according to any one of the preceding claims **characterised in that** the magnet (19) exerts a closing force on the cover (9) at least in a closed position of the cover (9).

7. Roof rack device according to any one of the preceding claims **characterised in that** the magnet (19) is attached to the cover (9) and the magnetic field sensor (20) to the roof rail (2) or to a fastening element (15) having the fastening socket (6).

8. Roof rack device according to any one of the preceding claims **characterised in that the** magnet (19) and the magnet field sensor (20) are attached to the roof rail (2) or the fastening element (15) and the cover (9) has a magnetic yoke (26) via which in the closed position of the cover (9) a magnetic flux between the magnet (19) and the magnetic field sensor (20) is present.

9. Method of operating a control device (22) of a motor vehicle with a roof rack device (1), more particularly according to one or more of the preceding claims, wherein the roof rack device (1) has a roof rail (2) that can be fastened to a roof of the motor vehicle and a load carrier (4) that can be mounted on the roof rail (2), wherein the load carrier (4) has at least one fastening projection (5) which on assembly of the load carrier (4) on the roof rail (2) engages with the roof rail (2) through a recess (7) therein and there interacts with at least one fastening socket (6) for holding the load carrier (4), wherein in the non-mounted stated of the load carrier (4) the recess (7) can be closed by means of a cover (9), **characterised in that** a state of covering of the recess (7) can be detected in a contact-less manner by a recording device (18), wherein the state of covering indicates whether the recess (7) is closed by the cover (9) or is at least partially uncovered, and wherein the presence of the load carrier (4) on the roof rail (2) can be recognised if the recess (7) is at partially uncovered by the cover (9) and wherein at least one device of the motor vehicle is operated by the control device (22) when the recess (7) is closed in a first operating mode and when the recess (7) is partially open in a second operating mode.

10. Control device for a motor vehicle with a roof rack device according to one or more of claims 1 to 8, **characterised in that** the control device (22) is designed for implementing the method according to claim 9.

## Revendications

1. Galerie de toit (1) pour un véhicule automobile, avec un longeron de toit (2) pouvant être fixé à un toit du véhicule automobile et avec un dispositif porteur de charges (4) pouvant être monté sur le longeron de toit (2), le dispositif porteur de charges (4) comportant au moins une partie en saillie de fixation (5) qui, lors du montage du dispositif porteur de charges (4) sur le longeron de toit (2), s'engage dans le longeron de toit (2) à travers un trou (7) de celui-ci et coopère là avec au moins un logement de fixation (6) pour tenir le dispositif porteur de charges (4), le trou (7) pouvant être fermé au moyen d'un capot (9) lorsque le dispositif porteur de charges (4) n'est pas monté, **caractérisée en ce qu'**un état de recouvrement du trou (7) peut être constaté sans contact au moyen d'un dispositif de détection (18), l'état de recouvrement indiquant si le trou (7) est fermé par le capot (9) ou au moins partiellement dégagé et la présence du dispositif porteur de charges (4) sur le longeron de toit (2) étant détectée si le trou (7) est au moins partiellement dégagé du capot (9).

2. Galerie de toit selon la revendication 1, **caractérisée en ce que** le logement de fixation (6) se trouve dans un élément de fixation (15) qui est agencé, notamment fixé, dans un logement (16) du longeron de toit (2).

3. Galerie de toit selon l'une des revendications précédentes, **caractérisée en ce que** le capot (9) est conçu comme un volet (10) et est monté pivotant sur le longeron de toit (2) et/ou sur l'élément de fixation (15).

4. Galerie de toit selon l'une des revendications précédentes, **caractérisée en ce que** le capot (9) comporte une zone d'actionnement (24) qui, lors du montage de dispositif porteur de charges (4) sur le longeron de toit (2), coopère avec une partie en saillie d'actionnement du dispositif porteur de charges (4) pour dégager le capot (9) du trou (7).

5. Galerie de toit selon l'une des revendications précédentes, **caractérisée en ce que** le dispositif de détection (18) comporte au moins un aimant (19) et au moins un capteur de champ magnétique (20).

6. Galerie de toit selon l'une des revendications précédentes, **caractérisée en ce que**, au moins lorsque le capot (9) est en position fermée, l'aimant (19) crée une force de verrouillage sur le capot (9).

7. Galerie de toit selon l'une des revendications précédentes, **caractérisée en ce que** l'aimant (19) est fixé au capot (9) et le capteur de champ magnétique (20) est fixé au longeron de toit (2) ou à un élément de fixation (15) comportant le logement de fixation (6).

8. Galerie de toit selon l'une des revendications précédentes, **caractérisée en ce que** l'aimant (19) et le capteur de champ magnétique (20) sont fixés au longeron de toit (2) ou à l'élément de fixation (15) et le capot (9) comporte une culasse magnétique (26) par l'intermédiaire de laquelle un flux magnétique existe entre l'aimant (19) et le capteur de champ magnétique (20) lorsque le capot (9) est en position fermée.

9. Procédé de fonctionnement d'un appareil de commande (22) d'un véhicule automobile avec une galerie de toit (1), notamment selon une ou plusieurs des revendications précédentes, la galerie de toit (1) comportant un longeron de toit (2) pouvant être fixé à un toit du véhicule automobile et avec un dispositif porteur de charges (4) pouvant être monté sur le longeron de toit (2), le dispositif porteur de charges (4) comportant au moins une partie en saillie de fixation (5) qui, lors du montage du dispositif porteur de charges (4) sur le longeron de toit (2), s'engage dans le longeron de toit (2) à travers un trou de celui-ci et coopère là avec au moins un logement de fixation (6) pour tenir le dispositif porteur de charges (4), le trou (7) pouvant être fermé au moyen d'un capot (9) lorsque le dispositif porteur de charges (4) n'est pas monté, **caractérisé en ce qu'**un état de recouvrement du trou (7) peut être constaté sans contact au moyen d'un dispositif de détection (18), l'état de recouvrement indiquant si le trou (7) est fermé par le capot (9) ou au moins partiellement dégagé et la présence du dispositif porteur de charges (4) sur le longeron de toit (2) étant détectée si le trou (7) est au moins partiellement dégagé du capot (9) et l'appareil de commande (22) faisant fonctionner un dispositif du véhicule automobile dans un premier mode de fonctionnement lorsque le trou (7) est fermé et dans un deuxième mode de fonctionnement lorsque le trou (7) est au moins partiellement ouvert.

10. Appareil de commande pour un véhicule automobile avec une galerie de toit selon une ou plusieurs des revendications 1 à 8, **caractérisé en ce que** l'appareil de commande (22) est conçu pour la mise en oeuvre du procédé selon la revendication 9.
